(19) Europäisches Patentamt
European Patent Office
Office européen des brevets

(11) **EP 4 518 487 A1**

(12) **EUROPEAN PATENT APPLICATION**
published in accordance with Art. 153(4) EPC

(43) Date of publication:
05.03.2025 Bulletin 2025/10

(21) Application number: 23794830.2

(22) Date of filing: 15.03.2023

(51) International Patent Classification (IPC):
*H04W 72/04* (2023.01)

(52) Cooperative Patent Classification (CPC):
H04W 72/04; H04W 72/0453; H04W 72/23;
H04W 72/232

(86) International application number:
PCT/CN2023/081685

(87) International publication number:
WO 2023/207394 (02.11.2023 Gazette 2023/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.04.2022 CN 202210475953

(71) Applicant: Datang Mobile Communications
Equipment Co., Ltd.
Beijing 100085 (CN)

(72) Inventors:
• SI, Qianqian
Beijing 100085 (CN)
• ZHAO, Yue
Beijing 100085 (CN)
• XING, Yanping
Beijing 100085 (CN)
• GAO, Xuejuan
Beijing 100085 (CN)

(74) Representative: Studio Torta S.p.A.
Via Viotti, 9
10121 Torino (IT)

(54) **RESOURCE DETERMINATION METHOD AND APPARATUS, AND TERMINAL AND NETWORK-SIDE DEVICE**

(57) A resource determination method, a device, a terminal, and a network side device are provided. The method includes: a terminal determining a range of first frequency domain resources and a range of second frequency domain resources within a BWP according to configuration information, where the first frequency domain resources and the second frequency domain resources within the BWP do not overlap, and a transmission direction corresponding to the first frequency domain resources is different from a transmission direction corresponding to the second frequency domain resources.

start

a terminal determining a range of first frequency domain resources and a range of second frequency domain resources within a BWP according to configuration information, where the first frequency domain resources and the second frequency domain resources within the BWP do not overlap, and a transmission direction corresponding to the first frequency domain resources is different from a transmission direction corresponding to the second frequency domain resources — 101

end

Fig. 1

**Description**

CROSS REFERENCE OF RELATED APPLICATION

The present disclosure claims a priority of Chinese patent disclosure No. 202210475953.8 filed on April 29, 2022, which is incorporated herein by reference in its entirety.

TECHNICAL FIELD

The present disclosure relates to the field of communication technology, and in particular to a resource determination method, a device, a terminal, and a network side device.

BACKGROUND

The communication system in the related technology supports time division duplex (TDD) and frequency division duplex (FDD). TDD and FDD refer to two duplex communication modes in mobile communication technology. TDD refers to time division duplex mode, and FDD refers to frequency division duplex mode. The TDD mode transmits and receives at different times on the same frequency channel, i.e., the carrier, and distinguishes the uplink and downlink transmission resources by time; the FDD mode transmits and receives at the same time on different frequency channels, and distinguishes the uplink and downlink transmission resources by frequency. The resource division method in the related art is not applicable to the full-duplex working mode.

SUMMARY

The present disclosure is to provide a resource determination method, a device, a terminal, and a network side device, which solves the problem that in the related art, resource partitioning method is not applicable to the full-duplex working mode.
A resource determination method, including:
a terminal determining a range of first frequency domain resources and a range of second frequency domain resources within a bandwidth part (BWP) according to configuration information, where the first frequency domain resources and the second frequency domain resources within the BWP do not overlap, and a transmission direction corresponding to the first frequency domain resources is different from a transmission direction corresponding to the second frequency domain resources.
Optionally, the method further includes:
determining, according to the configuration information, that the BWP includes the first frequency domain resources and the second frequency domain resources.
Optionally, the configuration information includes: public configuration information of a serving cell or BWP configuration information;
the determining, according to the configuration information, that the BWP includes the first frequency domain resources and the second frequency domain resources includes:

determining a start position of a target sub-band and bandwidth information of the target sub-band based on the public configuration information of the serving cell, where the serving cell includes at least one BWP; or determining a start position of the target sub-band and bandwidth information of the target sub-band based on the BWP configuration information;
according to the start position of the target sub-band, the bandwidth information of the target sub-band, and related information of the BWP, determining that the BWP includes the first frequency domain resources and the second frequency domain resources.

Optionally, the public configuration information of the serving cell includes a carrier start position, a first offset between the start position of the target sub-band and the carrier start position;
the determining the start position of the target sub-band based on the public configuration information of the serving cell includes:
determining the start position of the target sub-band according to the carrier start position and the first offset.
Optionally, the BWP configuration information includes a start position of the BWP, a second offset between a start position of the target sub-band and a start position of the BWP;
the determining the start position of the target sub-band based on the BWP configuration information includes:
determining the start position of the target sub-band according to the start position of the BWP and the second offset.

Optionally, the determining that the BWP includes the first frequency domain resource and the second frequency domain resource according to the start position of the target sub-band, the bandwidth information of the target sub-band and the related information of the BWP includes:

determining an end position of the target sub-band according to a start position of the target sub-band and bandwidth information of the target sub-band;

according to a positional relationship between the start position of the target sub-band and/or the end position of the target sub-band and a bandwidth range of the BWP, determining that the BWP includes the first frequency domain resources and the second frequency domain resources.

Optionally, the determining that the BWP includes the first frequency domain resource and the second frequency domain resource according to the start position of the target sub-band, the bandwidth information of the target sub-band and the related information of the BWP includes:

according to a second offset between a start position of the target sub-band and a start position of the BWP, determining that the BWP includes the first frequency domain resources and the second frequency domain resources.

Optionally, the determining that the BWP includes the first frequency domain resource and the second frequency domain resource according to the positional relationship between the start position of the target sub-band and/or the end position of the target sub-band and the bandwidth range of the BWP includes:

if the start position of the target sub-band and/or the end position of the target sub-band is within the bandwidth range of the BWP, determining that the BWP includes the first frequency domain resources and the second frequency domain resources.

Optionally, the determining that the BWP includes the first frequency domain resource and the second frequency domain resource according to the second offset between the start position of the target sub-band and the start position of the BWP includes one of the following:

if the second offset is less than or equal to 0, and the end position of the target sub-band is greater than or equal to the start position of the BWP, determining that the BWP includes the first frequency domain resources and the second frequency domain resources;

if the second offset is greater than 0 and is smaller than the bandwidth of the BWP, determining that the BWP includes the first frequency domain resources and the second frequency domain resources.

Optionally, the determining the range of the first frequency domain resource and the range of the second frequency domain resource within the BWP according to the configuration information includes:

according to the configuration information, determining that the frequency domain resources overlapping with the bandwidth of the target sub-band in the bandwidth range of the BWP are the range of the first frequency domain resources corresponding to the target sub-band; and the other frequency domain resources in the bandwidth range of the BWP except the range of the first frequency domain resources are the range of the second frequency domain resources.

Optionally, the method further includes:

when it is determined that the BWP includes the first frequency domain resource and the second frequency domain resource, determining that a working mode of the terminal is a sub-band full-duplex working mode.

Optionally, in the sub-band full-duplex working mode, the terminal performs at least one of the following operations:

performing a transmission based on downlink control information (DCI) determined based on the sub-band bandwidth;

determining whether to perform a transmission in the target sub-band based on transmission direction indication information;

determining a transmission direction based on the transmission direction indication information; and

determining the transmission direction within a time unit based on the first rule.

Optionally, the method further includes:

performing data transmission with a network side device based on the first frequency domain resources and the second frequency domain resources respectively;

the first frequency domain resources are used for data transmission in a first direction, and the second frequency domain resources are used for data transmission in a second direction.

A resource indication method is further provided in the embodiment of the present disclosure, including:

a network side device sending configuration information to a terminal, where the configuration information is configured to indicate a range of first frequency domain resources and a range of second frequency domain resources within bandwidth part (BWP);

where the first frequency domain resources and the second frequency domain resources within the BWP do not overlap, and a transmission direction corresponding to the first frequency domain resources is different from a transmission direction corresponding to the second frequency domain resources.

Optionally, the configuration information is configured to indicate that the BWP includes the first frequency domain resources and the second frequency domain resources.

Optionally, the configuration information includes: public configuration information of a serving cell or BWP configuration information;

the configuration information being configured to indicate that the BWP includes the first frequency domain resources and the second frequency domain resources includes:

indicating a start position of a target sub-band and bandwidth information of the target sub-band through public configuration information of the serving cell, where the serving cell includes at least one BWP; or indicating a start position of a target sub-band and bandwidth information of a target sub-band through BWP configuration information; through the start position of the target sub-band, the bandwidth information of the target sub-band and related information of the BWP, indicating that the BWP includes the first frequency domain resources and the second frequency domain resources.

Optionally, the public configuration information of the serving cell includes a carrier start position, a first offset between the start position of the target sub-band and the carrier start position;

indicating the start position of the target sub-band through the public configuration information of the serving cell includes:

indicating the start position of the target sub-band by the carrier start position and the first offset.

Optionally, the BWP configuration information includes a start position of the BWP, a second offset between the start position of the target sub-band and a start position of the BWP;

the indicating the start position of the target sub-band by the BWP configuration information includes:

indicating the start position of the target sub-band by the start position of the BWP and the second offset.

Optionally, when the configuration information indicates that the BWP includes the first frequency domain resource and the second frequency domain resource, the configuration information indicates that a working mode of the terminal is a sub-band full-duplex working mode.

Optionally, in the sub-band full-duplex working mode, the network side device performs at least one of the following operations:

performing a transmission based on downlink control information (DCI) determined based on the sub-band bandwidth;

determining whether to perform a transmission in the target sub-band based on transmission direction indication information;

determining a transmission direction based on the transmission direction indication information;

determining the transmission direction within a time unit based on the first rule.

Optionally, the method further includes:

performing data transmission with the terminal based on the first frequency domain resources and the second frequency domain resources respectively;

the first frequency domain resources are used for data transmission in a first direction, and the second frequency domain resources are used for data transmission in a second direction.

A terminal is further provided in the embodiment of the present disclosure, including: a memory, a transceiver, and a processor:

the memory is configured to store a computer program; a transceiver is configured to send and receive data under a control of the processor; and a processor is configured to read the computer program in the memory to perform:

determining a range of first frequency domain resources and a range of second frequency domain resources within a bandwidth part (BWP) according to configuration information, where the first frequency domain resources and the second frequency domain resources within the BWP do not overlap, and a transmission direction corresponding to the first frequency domain resources is different from a transmission direction corresponding to the second frequency domain resources.

Optionally, the processor is configured to read the computer program in the memory to perform:
determining, according to the configuration information, that the BWP includes the first frequency domain resources and the second frequency domain resources.

Optionally, the configuration information includes: public configuration information of a serving cell or BWP configuration information;
the processor is configured to read the computer program in the memory to perform:

determining a start position of a target sub-band and bandwidth information of the target sub-band based on the public configuration information of the serving cell, where the serving cell includes at least one BWP; or determining a start position of the target sub-band and bandwidth information of the target sub-band based on the BWP configuration information;
according to the start position of the target sub-band, the bandwidth information of the target sub-band, and related information of the BWP, determining that the BWP includes the first frequency domain resources and the second frequency domain resources.

Optionally, the public configuration information of the serving cell includes a carrier start position, a first offset between the start position of the target sub-band and the carrier start position;
the processor is configured to read the computer program in the memory to perform:
determining the start position of the target sub-band according to the carrier start position and the first offset.

Optionally, the BWP configuration information includes a start position of the BWP, a second offset between a start position of the target sub-band and a start position of the BWP;
the processor is configured to read the computer program in the memory to perform:
determining the start position of the target sub-band according to the start position of the BWP and the second offset.

Optionally, the processor is configured to read the computer program in the memory to perform:

determining an end position of the target sub-band according to a start position of the target sub-band and bandwidth information of the target sub-band;
according to a positional relationship between the start position of the target sub-band and/or the end position of the target sub-band and a bandwidth range of the BWP, determining that the BWP includes the first frequency domain resources and the second frequency domain resources.

Optionally, the processor is configured to read the computer program in the memory to perform:
according to a second offset between a start position of the target sub-band and a start position of the BWP, determining that the BWP includes the first frequency domain resources and the second frequency domain resources.

Optionally, the processor is configured to read the computer program in the memory to perform:
if the start position of the target sub-band and/or the end position of the target sub-band is within the bandwidth range of the BWP, determining that the BWP includes the first frequency domain resources and the second frequency domain resources.

Optionally, the processor is configured to read the computer program in the memory to perform:

if the second offset is less than or equal to 0, and the end position of the target sub-band is greater than or equal to the start position of the BWP, determining that the BWP includes the first frequency domain resources and the second frequency domain resources;
if the second offset is greater than 0 and is smaller than the bandwidth of the BWP, determining that the BWP includes the first frequency domain resources and the second frequency domain resources.

Optionally, the processor is configured to read the computer program in the memory to perform:
according to the configuration information, determining that the frequency domain resources overlapping with the bandwidth of the target sub-band in the bandwidth range of the BWP are the range of the first frequency domain resources corresponding to the target sub-band; and the other frequency domain resources in the bandwidth range of the BWP except the range of the first frequency domain resources are the range of the second frequency domain resources.

Optionally, the processor is configured to read the computer program in the memory to perform:
when it is determined that the BWP includes the first frequency domain resource and the second frequency domain resource, determining that a working mode of the terminal is a sub-band full-duplex working mode.

Optionally, the processor is configured to read the computer program in the memory to perform:

performing a transmission based on downlink control information (DCI) determined based on the sub-band bandwidth;

determining whether to perform a transmission in the target sub-band based on transmission direction indication information;

determining a transmission direction based on the transmission direction indication information;

determining the transmission direction within a time unit based on the first rule.

Optionally, the processor is configured to read the computer program in the memory to perform:

performing data transmission with a network side device based on the first frequency domain resources and the second frequency domain resources respectively;

where the first frequency domain resources are used for data transmission in a first direction, and the second frequency domain resources are used for data transmission in a second direction.

A network side device is provided in the embodiment of the present disclosure, including: a memory, a transceiver, and a processor:

the memory is configured to store a computer program; a transceiver is configured to send and receive data under a control of the processor; and a processor is configured to read the computer program in the memory to perform:

sending configuration information to a terminal, where the configuration information is configured to indicate a range of first frequency domain resources and a range of second frequency domain resources within bandwidth part (BWP);

where the first frequency domain resources and the second frequency domain resources within the BWP do not overlap, and a transmission direction corresponding to the first frequency domain resources is different from a transmission direction corresponding to the second frequency domain resources.

Optionally, the configuration information is configured to indicate that the BWP includes the first frequency domain resources and the second frequency domain resources.

Optionally, the configuration information includes: public configuration information of a serving cell or BWP configuration information;

the configuration information being configured to indicate that the BWP includes the first frequency domain resources and the second frequency domain resources includes:

indicating a start position of a target sub-band and bandwidth information of the target sub-band through public configuration information of the serving cell, where the serving cell includes at least one BWP; or indicating a start position of a target sub-band and bandwidth information of a target sub-band through BWP configuration information; through the start position of the target sub-band, the bandwidth information of the target sub-band and related information of the BWP, indicating that the BWP includes the first frequency domain resources and the second frequency domain resources.

Optionally, the public configuration information of the serving cell includes a carrier start position, a first offset between the start position of the target sub-band and the carrier start position;

the processor is configured to read the computer program in the memory to perform:

indicating the start position of the target sub-band by the carrier start position and the first offset.

Optionally, the BWP configuration information includes a start position of the BWP, a second offset between the start position of the target sub-band and a start position of the BWP;

the processor is configured to read the computer program in the memory to perform:

indicating the start position of the target sub-band by the start position of the BWP and the second offset.

Optionally, when the configuration information indicates that the BWP includes the first frequency domain resource and the second frequency domain resource, the configuration information indicates that a working mode of the terminal is a sub-band full-duplex working mode.

Optionally, in the sub-band full-duplex working mode, the processor is configured to read the computer program in the memory to perform:

performing a transmission based on downlink control information (DCI) determined based on the sub-band bandwidth;

determining whether to perform a transmission in the target sub-band based on transmission direction indication information;

determining a transmission direction based on the transmission direction indication information;

determining the transmission direction within a time unit based on the first rule.

Optionally, the processor is configured to read the computer program in the memory to perform:

performing data transmission with the terminal based on the first frequency domain resources and the second frequency domain resources respectively;

where the first frequency domain resources are used for data transmission in a first direction, and the second frequency domain resources are used for data transmission in a second direction.

A resource determination apparatus is provided in the embodiment of the present disclosure, including:
a first determining unit, configured to determine a range of first frequency domain resources and a range of second frequency domain resources within a bandwidth part (BWP) according to configuration information, where the first frequency domain resources and the second frequency domain resources within the BWP do not overlap, and a transmission direction corresponding to the first frequency domain resources is different from a transmission direction corresponding to the second frequency domain resources.

A resource indication apparatus is provided in the embodiment of the present disclosure, including:

a first sending unit, configured to send configuration information to a terminal, where the configuration information is configured to indicate a range of first frequency domain resources and a range of second frequency domain resources within bandwidth part (BWP);

where the first frequency domain resources and the second frequency domain resources within the BWP do not overlap, and a transmission direction corresponding to the first frequency domain resources is different from a transmission direction corresponding to the second frequency domain resources.

A processor-readable storage medium is provided in the embodiment of the present disclosure, storing a computer program, where when the computer program is executed by a processor, the computer program performs the resource determination method hereinabove, or performs the resource indication method hereinabove.
disclosed in the present invention are:
the present disclosure, the terminal determines the range of the first frequency domain resources and the range of the second frequency domain resources within the BWP according to the configuration information, and determines the specific division of the frequency domain resources corresponding to different transmission directions, so that the terminal can achieve full-duplex with non-overlapping sub-bands based on different frequency domain ranges, thereby improving the transmission performance of the full-duplex terminal.

BRIEF DESCRIPTION OF THE DRAWINGS

Fig.1 is a schematic diagram showing one of the flow charts of the resource determination method according to an embodiment of the present disclosure;
Fig.2 shows one of the schematic diagrams of resource division within a BWP according to an embodiment of the present disclosure;
Fig.3 shows a second schematic diagram of resource division within a BWP according to an embodiment of the present disclosure;
Fig.4 is a second schematic flow chart of the resource indication method according to an embodiment of the present disclosure;
Fig.5 is a schematic diagram showing one of the structures of the resource determination apparatus according to an embodiment of the present disclosure;
Fig.6 shows a second structural diagram of the resource indication apparatus according to an embodiment of the present disclosure;
Fig.7 is a schematic diagram showing the structure of a terminal according to an embodiment of the present disclosure; and
Fig.8 is a schematic diagram showing the structure of a network- side device according to an embodiment of the present disclosure.

DETAILED DESCRIPTION

In order to make the technical problems, technical solutions and advantages to be solved by the present disclosure clearer, the following will be described in detail with reference to the accompanying drawings and specific embodiments. In the following description, specific details such as specific configurations and components are provided only to help fully understand the embodiments of the present disclosure. Therefore, it should be clear to those skilled in the art that various changes and modifications can be made to the embodiments described herein without departing from the scope and spirit of the present disclosure. In addition, for clarity and brevity, the description of known functions and structures is omitted.

It should be understood that the references to "one embodiment" or "an embodiment" throughout the specification mean that specific features, structures, or characteristics associated with the embodiment are included in at least one embodiment of the present disclosure. Therefore, the references to "in one embodiment" or "in an embodiment" appearing throughout the specification do not necessarily refer to the same embodiment. In addition, these specific features, structures, or characteristics may be combined in any suitable manner in one or more embodiments.

In various embodiments of the present disclosure, it should be understood that the sequence numbers of the following processes do not imply the order of execution, and the execution order of each process should be determined by its function and internal logic, and should not constitute any limitation on the implementation process of the embodiments of the present disclosure.

In the present disclosure, the term "and/or" describes the association relationship of associated objects, indicating that three relationships may exist. For example, A and/or B may represent three situations: A exists alone, A and B exist at the same time, and B exists alone. The character "/" generally indicates that the associated objects before and after are in an "or" relationship.

The "a plurality of " in the present disclosure refers to two or more than two, and other quantifiers are similar thereto.

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by ordinary technicians in this field without making creative work are within the scope of protection of the present disclosure.

Specifically, the embodiments of the present disclosure provide a resource determination method, apparatus, terminal, and network side device, which solve the problem that related transmission methods are not applicable to a full-duplex working mode with non-overlapping sub-bands.

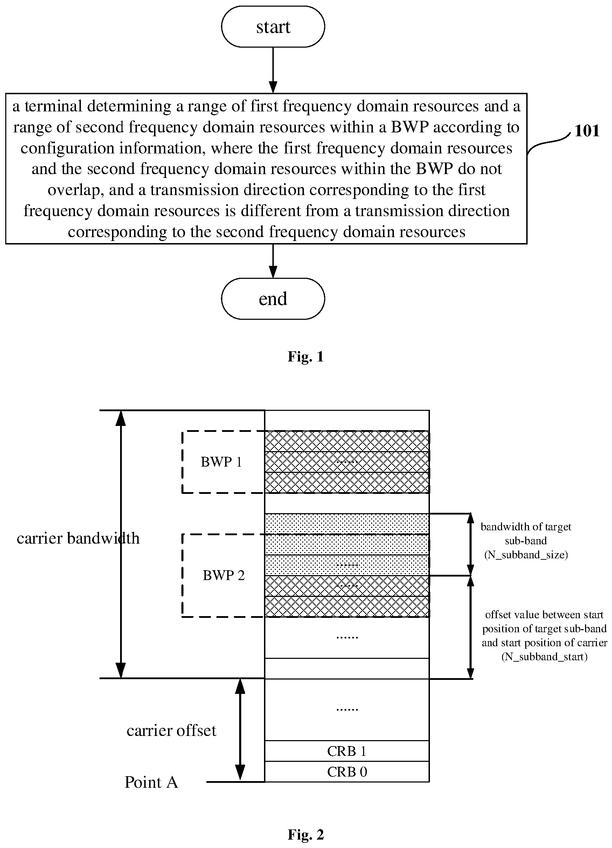

As shown in Fig.1, an embodiment of the present disclosure provides a resource determination method, which specifically includes the following steps:

Step 101: a terminal determining a range of first frequency domain resources and a range of second frequency domain resources within a bandwidth part (BWP) according to configuration information, where the first frequency domain resources and the second frequency domain resources within the BWP do not overlap, and a transmission direction corresponding to the first frequency domain resources is different from a transmission direction corresponding to the second frequency domain resources.

In this embodiment, the terminal may be a terminal supporting sub-band full-duplex. The range of the first frequency domain resource and the range of the second frequency domain resource in the BWP are determined according to the configuration information, and the configuration information indicates that the BWP includes the first frequency domain resource and the second frequency domain resource, where the transmission direction corresponding to the first frequency domain resource in the BWP is different from the transmission direction corresponding to the second frequency domain resource, for example: the first frequency domain resource is a sub-band for uplink transmission, and the second frequency domain resource is a sub-band for determining the transmission direction based on the configuration information; or, the transmission directions of the first frequency domain resource and the second frequency domain resource are determined by different configuration information respectively.

Optionally, the transmission direction corresponding to the first frequency domain resource is different from the transmission direction corresponding to the second frequency domain resource, which may include: in at least part of the time units, the transmission direction corresponding to the first frequency domain resource is different from the transmission direction corresponding to the second frequency domain resource. For example:

1) In some time units, the first frequency domain resource and the second frequency domain resource have different transmission directions. For example, the second transmission resource is used for uplink transmission, and the first frequency domain resource is used for downlink transmission in some time units;

For another example, the first frequency domain resources are used for uplink transmission in some time units, and part of the second frequency domain resources in the some time units are used for downlink transmission.

2) In all time units, the transmission direction corresponding to the first frequency domain resource is different from the transmission direction corresponding to the second frequency domain resource. For example, the first frequency domain resource is used for uplink transmission, and the second frequency domain resource is used for downlink transmission.

The time unit may be a time length in units of subframes, time slots, symbols, etc.

Optionally, the method further includes, the terminal receiving the configuration information sent by the network side device. That is, the network side device determines the division of frequency domain resources and/or the transmission direction corresponding to each part of the frequency domain resources and other information, and indicates the division of each part of the frequency domain resources to the terminal through the configuration information.

In the BWP, the first frequency domain resources and the second frequency domain resources do not overlap, that is, the sub-band corresponding to the first frequency domain resources and the sub-band corresponding to the second frequency domain resources do not overlap.

The terminal may determine the specific division of each portion of the frequency domain resources within the BWP according to the configuration information, that is, determine the range of the first frequency domain resources and/or the range of the second frequency domain resources.

In the present disclosure, the terminal determines the range of the first frequency domain resources and the range of the second frequency domain resources within the BWP according to the configuration information, and determines the specific division of the frequency domain resources corresponding to different transmission directions, so that the terminal can achieve full-duplex with non-overlapping sub-bands based on different frequency domain ranges, thereby improving the transmission performance of the full-duplex terminal.

Optionally, the method further includes: performing data transmission with a network side device based on the first frequency domain resources and the second frequency domain resources respectively; where the first frequency domain resources are used for data transmission in a first direction, and the second frequency domain resources are used for data transmission in a second direction.

In this embodiment, the first direction and the second direction are different, the first direction may be an uplink transmission direction and the second direction may be a downlink transmission direction, or the first direction may be a downlink transmission direction and the second direction may be an uplink transmission direction. The first frequency domain resource is used for data transmission in the first direction, and the second transmission resource is used for data transmission in the second direction, thereby realizing full-duplex mode operation.

As an optional embodiment, the method further includes: determining, according to the configuration information, that the BWP includes the first frequency domain resources and the second frequency domain resources.

In this embodiment, the terminal can determine that the BWP includes the first frequency domain resource and the second frequency domain resource according to the configuration information sent by the network side device, thereby determining the range of the first frequency domain resource and the range of the second frequency domain resource respectively. Since the first frequency domain resource and the second frequency domain resource correspond to different transmission directions, the terminal can implement a full-duplex working mode with non-overlapping sub-bands based on the first frequency domain resource and the second frequency domain resource.

Optionally, the configuration information includes: public configuration information or BWP configuration information of the serving cell;

The determining, according to the configuration information, that the BWP includes the first frequency domain resources and the second frequency domain resources includes:

determining a start position of a target sub-band and bandwidth information of the target sub-band based on the public configuration information of the serving cell, where the serving cell includes at least one BWP; or determining a start position of the target sub-band and bandwidth information of the target sub-band based on the BWP configuration information;

according to the start position of the target sub-band, the bandwidth information of the target sub-band, and related information of the BWP, determining that the BWP includes the first frequency domain resources and the second frequency domain resources.

In this embodiment, the configuration information includes public configuration information or BWP configuration information of the serving cell, and the terminal determines the start position and bandwidth information of the target sub-band based on the public configuration information or BWP configuration information of the serving cell.

The target sub-band refers to a specific sub-band used for uplink transmission or downlink transmission in a TDD carrier. For example, if the target sub-band refers to a sub-band used for uplink transmission, the terminal may determine the start position and bandwidth of the sub-band used for uplink transmission based on the public configuration information of the serving cell or based on the BWP configuration information, then the sub-band used for uplink transmission is removed from the BWP (or when there is a guard interval sub-band, it further includes removing the guard interval sub-band), and the remaining frequency domain resources may be the sub-band used for downlink transmission. If the target sub-band refers to a sub-band used for downlink transmission, the terminal may determine the start position and bandwidth of the sub-band used for downlink transmission based on the public configuration information of the serving cell or based on the BWP configuration information, then the sub-band used for downlink transmission is removed from the BWP (or when there is a guard interval sub-band, it further includes removing the guard interval sub-band), and the remaining frequency domain resources may be the sub-band used for uplink transmission.

Alternatively, the target sub-band refers to a sub-band used for uplink transmission and downlink transmission, but the transmission direction in a time unit may be different from the transmission direction in a sub-band excluding the frequency domain resources of the target sub-band, and the terminal can determine the start position and bandwidth of the target sub-band based on the public configuration information of the serving cell or based on the BWP configuration information.

In this embodiment, after determining the start position and bandwidth information of the target sub-band, it can be determined that the BWP includes the first frequency domain resource and the second frequency domain resource based on the start position and bandwidth information of the target sub-band and the related information of the BWP. The related information of the BWP may include: the start position of the BWP, the bandwidth information of the BWP, etc.

Optionally, the BWP related information may be determined according to the BWP configuration information; or, determined according to the carrier start position. The BWP related information is determined according to the carrier start position, for example: the terminal first determines the position of Point A, determines the carrier start position based on the interval between the configured Point A and the carrier start position, and determines the carrier bandwidth based on the configuration information, and the start position of the BWP can be obtained through the carrier start position and the offset value between the BWP start position and the carrier start position.

Optionally, the public configuration information of the serving cell includes a carrier start position, a start position of the target sub-band and a first offset between the carrier start position; determining the start position of the target sub-band based on the public configuration information of the serving cell includes: determining the start position of the target sub-band according to the carrier start position and the first offset.

In this embodiment, when the configuration information includes the public configuration information of the serving cell, the start position of the target sub-band can be calculated according to the subcarrier start position in the public configuration information of the serving cell and the first offset between the start position of the target sub-band and the start position of the carrier, and the start position of the target sub-band is marked as $N_{subband,j}^{start}$. The public configuration information of the serving cell may also include bandwidth information of the target sub-band, and the bandwidth information of the target sub-band is marked as $N_{subband,j}^{start}$.

Optionally, the BWP configuration information includes the start position of the BWP, the start position of the target sub-band and a second offset between the start position of the BWP; determining the start position of the target sub-band based on the BWP configuration information includes: determining the start position of the target sub-band according to the start position of the BWP and the second offset.

In this embodiment, when the configuration information includes the BWP configuration information, the start position of the target sub-band can be calculated according to the start position of the BWP in the BWP configuration information and the second offset between the start position of the target sub-band and the start position of the BWP, and the start position of the target sub-band is marked as $N_{subband,j}^{start}$. The BWP configuration information may also include bandwidth information of the target sub-band, and the bandwidth information of the target sub-band is marked as $N_{subband,j}^{start}$.

Optionally, the configuration information may include bandwidth information of the target sub-band.

As an optional embodiment, determining, according to the start position of the target sub-band, the bandwidth information of the target sub-band, and the related information of the BWP, that the BWP includes the first frequency domain resources and the second frequency domain resources, includes:

determining an end position of the target sub-band according to a start position of the target sub-band and bandwidth information of the target sub-band;

according to a positional relationship between the start position of the target sub-band and/or the end position of the target sub-band and a bandwidth range of the BWP, determining that the BWP includes the first frequency domain resources and the second frequency domain resources.

In this embodiment, the positional relationship between the start position and/or the ending position of the target sub-band and the bandwidth range of the BWP is, for example, whether the start position and/or the ending position of the target sub-band is within the bandwidth range of the BWP. That is, the terminal determines whether the BWP contains the target sub-band or whether the BWP contains the first frequency domain resource and the second frequency domain resource based on whether the start position and/or the ending position of the target sub-band is within the bandwidth range of the BWP, thereby determining whether uplink transmission and downlink transmission exist simultaneously.

Optionally, based on the positional relationship between the start position of the target sub-band and/or the ending position of the target sub-band and the bandwidth range of the BWP, it is determined that the BWP includes the first frequency domain resources and the second frequency domain resources, including: if the start position of the target sub-band and/or the ending position of the target sub-band is within the bandwidth range of the BWP, it is determined that the BWP includes the first frequency domain resources and the second frequency domain resources.

In this embodiment, when the start position of the target sub-band and/or the ending position of the target sub-band is within the bandwidth range of the BWP, it means that at least part of the target sub-band is within the bandwidth range of the BWP. Then at least part of the frequency domain resources in the BWP are used for transmission in the transmission direction corresponding to the target sub-band, and the remaining frequency domain resources in the BWP except those overlapping with the target sub-band can be used for transmission in another transmission direction.

For example, if the start position of the target sub-band is $N_{subband,j}^{start}$, and the bandwidth of the target sub-band is $N_{subband,j}^{size}$, then the ending position of the target sub-band can be calculated $N_{subband,j}^{end}$ as:

$$N_{subband,j}^{end} = N_{subband,j}^{start} + N_{subband,j}^{size} - 1;$$

If the value of $N_{subband,j}^{start}$ any one of or $N_{subband,j}^{end}$ is greater than or equal to the start position of the BWP $N_{BWP,i}^{start}$, and less than or equal to the ending position of the BWP $N_{BWP,i}^{end}$, it is determined that the start position or the ending position of the target sub-band is within the bandwidth range of the BWP, and the BWP includes a first frequency domain resource and a second frequency domain resource. If the transmission directions of the first frequency domain resource and the second frequency domain resource are different, it can be determined that there is both uplink transmission and downlink transmission in the BWP.

where,

$$N_{BWP,i}^{end} = N_{BWP,i}^{start} + N_{BWP,i}^{size} - 1.$$

As an optional embodiment, determining that the BWP includes the first frequency domain resources and the second frequency domain resources according to the start position of the target sub-band, the bandwidth information of the target sub-band, and the related information of the BWP includes:

according to a second offset between a start position of the target sub-band and a start position of the BWP, it is determined that the BWP includes the first frequency domain resources and the second frequency domain resources.

In this embodiment, the related information of the BWP includes the second offset between the start position of the target sub-band and the start position of the BWP. The related information of the BWP may also include the start position of the BWP, and the terminal may determine the start position of the target sub-band based on the start position of the BWP, the second offset between the start position of the target sub-band and the start position of the BWP, and determine the ending position of the target sub-band based on the start position of the target sub-band and the bandwidth information.

Optionally, determining, according to a second offset between a start position of the target sub-band and a start position of the BWP, that the BWP includes the first frequency domain resource and the second frequency domain resource includes one of the following:

(1) If the second offset is less than or equal to 0, and the end position of the target sub-band is greater than or equal to the start position of the BWP, it is determined that the BWP includes the first frequency domain resources and the second frequency domain resources.

In this embodiment, the end position of the target sub-band can be calculated according to the start position of the target sub-band and the bandwidth of the target sub-band. The end position of the target sub-band $N_{subband,j}^{end}$ is:

$$N_{subband,j}^{end} = N_{subband,j}^{start} + N_{subband,j}^{size} - 1.$$

The second offset is denoted Xas. $X = N_{subband,j}^{start} - N_{BWP,i}^{start}$

If $X \leq 0$, and $N_{subband,j}^{end} \geq N_{BWP,i}^{start}$ when, it means that the start position of the target sub-band is not within the bandwidth range of the BWP, and the ending position of the target sub-band is within the bandwidth range of the BWP, it can be determined that the BWP includes a partial frequency domain of the target sub-band, and the BWP includes a first frequency domain resource and a second frequency domain resource. If the first frequency domain resource and the second frequency domain resource correspond to different transmission directions, respectively, there are resources for uplink transmission and downlink transmission in the BWP.

If the above condition (1) is not satisfied, it can be determined that the target sub-band is not included in the BWP, and there are no resources for uplink transmission and downlink transmission simultaneously in the BWP.

Optionally, determining the range of the first frequency domain resources and the range of the second frequency domain resources within the BWP according to the configuration information includes:

According to the configuration information, the frequency domain resources overlapping with the bandwidth of the target sub-band in the bandwidth range of the BWP are determined as the range of the first frequency domain resources corresponding to the target sub-band; and the other frequency domain resources in the bandwidth range of the BWP except the range of the first frequency domain resources are the range of the second frequency domain resources. In this embodiment, when it is determined that the BWP includes the first frequency domain resources and the second frequency domain resources, the range of the first frequency domain resources and the range of the second frequency domain resources are determined.

In the BWP, the frequency domain resources overlapping with the target sub-band and the frequency domain resources not overlapping with the target sub-band are respectively the first frequency domain resources and the second frequency domain resources.

For example, when $X \leq 0$, and $N_{subband,j}^{end} \geq N_{BWP,i}^{start}$, the bandwidth portion from PRB#0 to PRB#() in the BWP $X + N_{subband,j}^{size} - 1$ is overlapped with the target sub-band, the overlapped portion is the first frequency domain resource, and the remaining resources in the BWP are the second frequency domain resources. PRB is a physical resource block.

Optionally, the bandwidth portion in the BWP that overlaps with the target sub-band may also be the second frequency domain resources, and the remaining resources in the BWP are the first frequency domain resources.

(2) If the second offset is greater than 0 and the second offset is less than the bandwidth of the BWP, it is determined that the BWP includes the first frequency domain resources and the second frequency domain resources.

In this embodiment, if the second offset $X>0$, it means that the start position of the target sub-band is greater than the start position of the BWP, and the second offset is less than the bandwidth of the BWP ( $X < N_{BWP,i}^{size}$ ), that is, the start position of the target sub-band is less than the end position of the BWP, then the start position of the target sub-band is within the bandwidth range of the BWP, and it can be determined that some frequency domain resources in the BWP overlap with the target sub-band, then the BWP includes first frequency domain resources and second frequency domain resources, and if the first frequency domain resources and the second frequency domain resources correspond to different transmission directions, then the BWP contains resources for both uplink transmission and downlink transmission.

Optionally, determining a range of the first frequency domain resources and a range of the second frequency domain resources within the BWP according to the configuration information includes:

According to the configuration information, it is determined that the frequency domain resources overlapping with the bandwidth of the target sub-band in the bandwidth range of the BWP are the range of the first frequency domain resources corresponding to the target sub-band; and the other frequency domain resources in the bandwidth range of the BWP except the range of the first frequency domain resources are the range of the second frequency domain resources.

For example: when $X>0$ and the second offset is less than the bandwidth of the BWP, the start position of the target sub-band is within the bandwidth range of the BWP, but there are two situations for the end position of the target sub-band: the end position of the target sub-band is also within the bandwidth range of the BWP and the end position of the target sub-band is not within the bandwidth range of the BWP, that is, the end position of the target sub-band is greater than or equal to the end position of the BWP.

Among them, for the end position of the target sub-band which is greater than or equal to the end position of the BWP, that is, from $PRB\#( N_{subband,j}^{start} + N_{subband,j}^{size} - 1 \geq N_{BWP,i}^{start} + N_{BWP,i}^{size} - 1X)$ to

$$\text{PRB\#(} \ N_{BWP,i}^{start} + N_{BWP,i}^{size} - 1)$$ in the BWP is the frequency domain overlapping with the target sub-band, where the position of PRB#( X) is the start position of the target sub-band, $$\text{PRB\#(} \ N_{BWP,i}^{start} + N_{BWP,i}^{size} - 1)$$ is the end position of the BWP, and this part of the frequency domain is the part overlapping with the target sub-band, which can be the range of the first frequency domain resources, and the remaining frequency domain parts in the BWP can be the range of the second frequency domain resources; or, the overlapping part is the range of the second frequency domain resources, and the remaining frequency domain parts in the BWP are the range of the second frequency domain resources.

For the case where the end position of the target sub-band is within the bandwidth range of the BWP, that is $$N_{subband,j}^{start} + N_{subband,j}^{size} - 1 < N_{BWP,i}^{start} + N_{BWP,i}^{size} - 1$$ , the start position and the end position of the target sub-band are both within the bandwidth range of the BWP. From PRB#( X) to $$\text{PRB\#(} \ N_{subband,j}^{start} + N_{subband,j}^{size} - 1)$$ in the BWP is the frequency domain overlapping with the target sub-band, where Xthe position of PRB#() is the start position of the target sub-band, and $$N_{subband,j}^{start} + N_{subband,j}^{size} - 1$$ the position of PRB#() is the end position of the target sub-band. In the BWP, the frequency domain range corresponding to the target sub-band can be the range of the first frequency domain resources, and the remaining frequency domain parts in the BWP can be the range of the second frequency domain resources; or, the frequency domain range corresponding to the target sub-band is the range of the second frequency domain resources, and the remaining frequency domain parts in the BWP are the range of the second frequency domain resources.

Optionally, if the above conditions (1) and (2) are not met, it can be determined that the target sub-band is not included in the BWP, and there are no resources for uplink transmission and downlink transmission at the same time in the BWP.

Optionally, when determining the range of the first frequency domain resources and the range of the second frequency domain resources in the BWP according to the configuration information, it may include:

determinin the relevant information of the target sub-band according to the configuration information, and the relevant information of the target sub-band may include: the start position, ending position, bandwidth information, etc. of the target sub-band. Determine the frequency domain resources in the BWP that overlap with the bandwidth of the target sub-band according to the relevant information of the target sub-band and the relevant information of the BWP, and the overlapping frequency domain resources may be the first frequency domain resources, and the other resources in the BWP except the overlapping frequency domain resources may be the second frequency domain resources; or, the overlapping frequency domain resources may be the second frequency domain resources, and the other resources in the BWP except the overlapping frequency domain resources may be the first frequency domain resources. The relevant information of the BWP may include, for example: the start position, ending position, bandwidth information, etc. of the BWP.

The terminal determines the range of the overlapping frequency domain resources according to the relevant information of the target sub-band and the relevant information of the BWP, and then determines the range of the first frequency domain resources and the range of the second frequency domain resources within the BWP. Specifically, the specific content of the configuration information and the method for determining the range of the overlapping frequency domain resources refer to the above embodiment, which will not be repeated here.

As an optional embodiment, the method further includes:

When it is determined that the BWP includes the first frequency domain resource and the second frequency domain resource, it is determined that the working mode of the terminal is the sub-band full-duplex working mode.

In this embodiment, the BWP includes the first frequency domain resource and the second frequency domain resource, which may indicate that the BWP contains the target sub-band or has resources for both uplink transmission and downlink transmission, and it is determined that the terminal can operate in sub-band full-duplex mode.

Optionally, in the sub-band full-duplex working mode, the terminal performs at least one of the following operations:

1) performing a transmission based on downlink control information (DCI) determined based on the sub-band bandwidth; that is, the terminal transmits based on the size of the new DCI.

2) determining whether to perform a transmission in the target sub-band based on the transmission direction indication information; the terminal receives the transmission direction indication information, and determines whether a specific time slot/symbol is to be transmitted in the target sub-band based on the transmission direction indication information.

3) determining a transmission direction based on the transmission direction indication information; the terminal receives the transmission direction indication information, and determines the transmission direction based on the transmission direction indication information.

4) determining the transmission direction within a time unit based on a first rule; the first rule may be predefined or preconfigured, and the time unit may be, for example, a time slot/sub-time slot, for example, the protocol stipulates that uplink transmission is performed within a certain time slot.

Optionally, if the BWP does not include the target sub-band or the BWP only includes frequency domain resources in one transmission direction, the terminal may operate in a traditional mode.

Optionally, after the terminal determines the working mode, it can work according to the determined working mode, or the terminal will not immediately start the corresponding working mode, but there is additional configuration information to start the corresponding working mode. The embodiment of the present disclosure does not exclude the situation where additional signaling is required to start the corresponding working mode.

The implementation process of the resource determination method is described below through specific embodiments.

As shown in Fig. 2, the terminal is configured with the start position and bandwidth of the target sub-band within the carrier. Wherein N_sub-band_start represents the offset value between the start position of the target sub-band and the start position of the carrier, and N_sub-band_size represents the bandwidth of the target sub-band. Assume that the configured carrier start position is CRB#30 and the carrier bandwidth is 106 common resource blocks (CRBs). If the offset between the configured carrier start position and the target sub-band start position is 24 CRBs, the start position of the target sub-band can be determined to be CRB#54 (i.e., CRB#30+24). If the bandwidth of the target sub-band is configured to be 24 CRBs, the end position of the target sub-band can be determined to be CRB#77 (i.e., CRB#54+24-1).

The terminal is configured with BWP 1 and BWP 2, where the offset between the start position of BWP 1 and the start position of the carrier is 70 CRBs, and the bandwidth of BWP1 is 20 CRBs; the offset between the start position of BWP 2 and the start position of the carrier is 10 CRBs, and the bandwidth of BWP2 is 30 RBs. From the configuration information, it can be determined that the start position of BWP1 is CRB#100 (i.e., CRB#30+70), and the end position is CRB#119 (i.e., CRB#100+20-1). The start position of BWP2 is CRB#40 (i.e., CRB#30+10), and the end position is CRB#69 (i.e., CRB#40+30-1).

Method 1: As shown in Fig. 2, it can be determined that the start position or the ending position of the target sub-band is not within the bandwidth range of BWP1, so BWP1 does not contain the target sub-band/there are no resources for uplink transmission and downlink transmission at the same time. The start position of the target sub-band is within the bandwidth range of BWP2, so BWP2 contains the target sub-band/there are resources for uplink transmission and downlink transmission at the same time. It can be determined that the terminal works in the traditional mode in BWP1 and in the sub-band full-duplex mode in BWP2.

Method 2: As shown in Fig.2, the offset between the start position of the target sub-band and the start position of BWP1 can be determined X = 54 - 100 = -46, X<0, and the ending position of the target sub-band is less than the start position of BWP1: $N_{subband,j}^{start} + N_{subband,j}^{size} - 1 < N_{BWP,1}^{start}$ , so it is determined that BWP1 does not contain the target sub-band/there are no resources for uplink and downlink transmission at the same time. The offset between the start position of the target sub-band and the start position of BWP2 is determined X = 54 - 40 = 14, X>0, and $X \le N_{BWP,2}^{size} - 1$ , and it satisfies that the ending position of the target sub-band is greater than or equal to the ending position of BWP2: $N_{subband,j}^{start} + N_{subband,j}^{size} - 1 \ge N_{BWP,2}^{start} + N_{BWP,2}^{size} - 1$. Therefore, it is determined that PRB#14 to PRB#29 in BWP2 are the target sub-band, and it is determined that the target sub-band is contained in BWP/there are resources for uplink and downlink transmission at the same time.

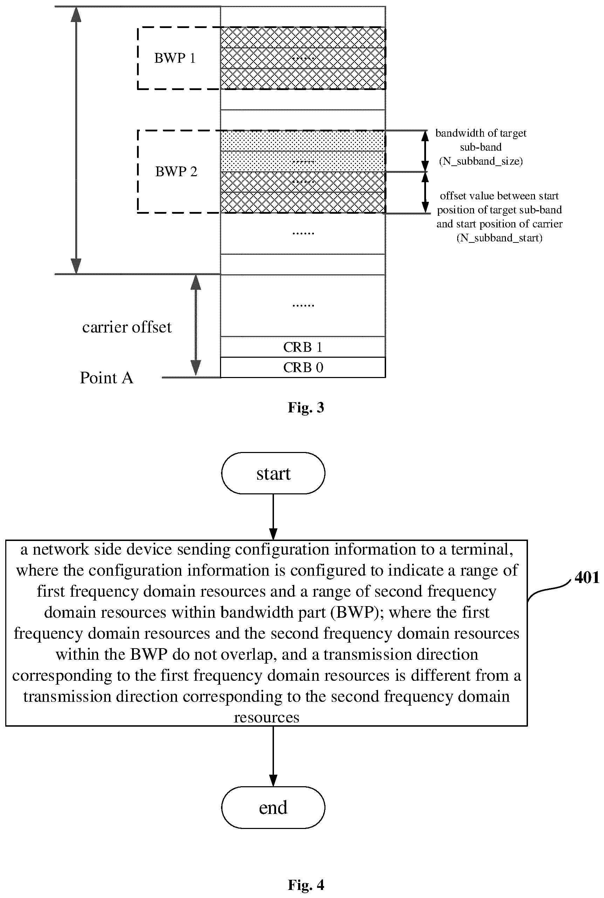

As shown in Fig. 3, the terminal is configured with the start position and bandwidth of the target sub-band in the BWP. Wherein N_sub-band_start represents the offset value between the start position of the target sub-band and the start position of the carrier, and N_sub-band_size represents the bandwidth of the target sub-band. If the target sub-band is not configured in BWP1, the terminal determines to work in the traditional mode in BWP1. In BWP2, the base station configures the target sub-band for the terminal, indicates the offset between the start position of BWP2 and the start position of the target sub-band, and indicates the bandwidth of the target sub-band. Since BWP2 contains the target sub-band/when there are resources for uplink transmission and downlink transmission, it can be determined that the terminal works in the sub-band full-duplex mode in BWP2.

According to the present disclosure, the terminal determines the range of the first frequency domain resources and the range of the second frequency domain resources within the BWP according to the configuration information, and determines the specific division of the frequency domain resources corresponding to different transmission directions, so that the terminal can realize full-duplex with non-overlapping sub-bands based on different frequency domain ranges, thereby improving the transmission performance of the full-duplex terminal.

As shown in Fig.4, the embodiment of the present disclosure further provides a resource indication method, which is applied to a network side device, including:

Step 401: a network side device sending configuration information to a terminal, where the configuration information is configured to indicate a range of first frequency domain resources and a range of second frequency domain resources within bandwidth part (BWP);

where the first frequency domain resources and the second frequency domain resources within the BWP do not overlap, and a transmission direction corresponding to the first frequency domain resources is different from a transmission direction corresponding to the second frequency domain resources.

In this embodiment, the network side device determines the frequency domain resources and the transmission direction corresponding to each part of the frequency domain resources, and indicates the division of each part of the frequency domain resources to the terminal through the configuration information. After receiving the configuration information, the terminal determines the range of the first frequency domain resources and the specific range of the second frequency domain resources within the BWP according to the configuration information.

Optionally, within the BWP, the transmission direction corresponding to the first frequency domain resource and the transmission direction corresponding to the second frequency domain resource are different, for example: the first frequency domain resource is a sub-band for uplink transmission, and the second frequency domain resource is a sub-band for determining the transmission direction based on the configuration information; or, the first frequency domain resource and the second frequency domain resource have transmission directions determined by different configuration information, respectively. Optionally, the transmission directions corresponding to the first frequency domain resource and the second frequency domain resource may be different, which may include that the transmission directions corresponding to the first frequency domain resource and the second frequency domain resource are different in at least some time units.

Optionally, the transmission direction corresponding to the first frequency domain resource is different from the transmission direction corresponding to the second frequency domain resource, which may include: in at least part of the time unit, the transmission direction corresponding to the first frequency domain resource is different from the transmission direction corresponding to the second frequency domain resource.

In an embodiment of the present disclosure, a network- side device sends configuration information to a terminal for indicating the division of frequency domain resources corresponding to different directions within a BWP, so that the terminal determines the specific division of each part of the frequency domain resources according to the configuration information, thereby enabling the terminal to achieve full-duplex with non-overlapping sub-bands based on different frequency domain ranges, thereby improving the transmission performance of the full-duplex terminal.

Optionally, the method further includes: performing data transmission with the terminal based on the first frequency domain resources and the second frequency domain resources respectively; where the first frequency domain resources are used for data transmission in a first direction, and the second frequency domain resources are used for data transmission in a second direction.

In this embodiment, the first direction and the second direction are different, the first direction may be an uplink transmission direction and the second direction may be a downlink transmission direction, or the first direction may be a downlink transmission direction and the second direction may be an uplink transmission direction. The first frequency domain resource is used for data transmission in the first direction, and the second transmission resource is used for data transmission in the second direction, so that the terminal can work in full-duplex mode.

Optionally, the configuration information is used to indicate that the BWP includes the first frequency domain resources and the second frequency domain resources.

In this embodiment, the network side device performs resource division, divides the BWP into first frequency domain resources and second frequency domain resources, and sends configuration information related to resource division to the terminal. Based on the configuration information, the terminal can determine that the BWP includes first frequency domain resources and second frequency domain resources, thereby determining the range of the first frequency domain resources and the range of the second frequency domain resources respectively. Since the transmission directions corresponding to the first frequency domain resources and the second frequency domain resources are different, the terminal can implement a full-duplex working mode with non-overlapping sub-bands based on the first frequency domain resources and the second frequency domain resources.

Optionally, the configuration information includes: public configuration information or BWP configuration information of the serving cell;

the configuration information is used to indicate that the first frequency domain resource and the second frequency domain resource are included in the BWP, including:

indicating the start position of the target sub-band and the bandwidth information of the target sub-band through the public configuration information of the serving cell, where the serving cell includes at least one BWP; or indicating the start position of the target sub-band and the bandwidth information of the target sub-band through the BWP configuration information;

through the start position of the target sub-band, the bandwidth information of the target sub-band and the related information of the BWP, it is indicated that the BWP includes the first frequency domain resources and the second frequency domain resources.

In this embodiment, the target sub-band refers to a specific sub-band used for uplink transmission or downlink transmission in a TDD carrier. For example, the target sub-band refers to a sub-band used for uplink transmission. The configuration information may include public configuration information of a serving cell, the public configuration information indicating the start position of the target sub-band and the bandwidth information of the target sub-band; or the configuration information may include BWP configuration information, the BWP configuration information may indicate the start position of the target sub-band and the bandwidth information of the target sub-band.

Alternatively, the target sub-band refers to a sub-band used for uplink transmission and downlink transmission, but the transmission direction in a time unit may be different from the transmission direction in the sub-band excluding the frequency domain resources of the target sub-band. The network side device may indicate the start position and bandwidth of the target sub-band through the public configuration information of the serving cell or the BWP configuration information, so that the terminal determines the start position and bandwidth of the target sub-band according to the public configuration information of the serving cell or based on the BWP configuration information.

Optionally, the public configuration information of the serving cell includes a carrier start position, a start position of the target sub-band and a first offset between the carrier start position; indicating the start position of the target sub-band through the public configuration information of the serving cell includes: indicating the start position of the target sub-band through the carrier start position and the first offset.

In this embodiment, when the configuration information includes the public configuration information of the serving cell, the carrier start position and the first offset may be configured in the public configuration information, so that the terminal calculates the start position of the target sub-band based on the carrier start position and the first offset, and the start position of the target sub-band is marked as $N^{start}_{subband,j}$. The public configuration information of the serving cell may also include bandwidth information of the target sub-band, and the bandwidth information of the target sub-band is marked as $N^{start}_{subband,j}$.

Optionally, the BWP configuration information includes the start position of the BWP, the start position of the target sub-band and a second offset between the start position of the BWP; indicating the start position of the target sub-band through the BWP configuration information includes: indicating the start position of the target sub-band through the start position of the BWP and the second offset.

In this embodiment, when the configuration information includes the BWP configuration information, the start position of the BWP and the second offset may be configured in the BWP configuration information, and the terminal may calculate the start position of the target sub-band based on the start position of the BWP and the second offset.

As an optional embodiment, when the configuration information indicates that the BWP includes the first frequency domain resources and the second frequency domain resources, the configuration information indicates that the working mode of the terminal is a sub-band full-duplex working mode.

In this embodiment, the BWP includes the first frequency domain resource and the second frequency domain resource, which may indicate that the BWP contains the target sub-band or has resources for both uplink transmission and downlink transmission, and the terminal can operate in sub-band full-duplex mode.

Optionally, in the sub-band full-duplex working mode, the network side device performs at least one of the following operations:

1) performing a transmission based on downlink control information (DCI) determined based on the sub-band bandwidth; that is, the network side device transmits based on the size of the new DCI.

2) determining whether to perform a transmission in the target sub-band based on the transmission direction indication information; the terminal receives the transmission direction indication information, and determines whether a specific time slot/symbol is to be transmitted in the target sub-band based on the transmission direction indication information.

3) determining a transmission direction based on the transmission direction indication information; the terminal receives the transmission direction indication information, and determines the transmission direction based on the transmission direction indication information.

4) determining the transmission direction within a time unit based on a first rule; the first rule may be predefined or preconfigured, and the time unit may be, for example, a time slot/sub-time slot, for example, the protocol stipulates that uplink transmission is performed within a certain time slot.

Optionally, after determining the working mode of the terminal, the terminal can work according to the determined working mode, or the terminal will not immediately start the corresponding working mode. The network side device sends additional configuration information to the terminal to instruct the terminal to start the corresponding working mode. The embodiment of the present disclosure does not exclude the situation where additional signaling is required to start the corresponding working mode.

It should be noted that the above-mentioned embodiment of the resource determination method applied to the terminal can be applied to the resource indication method, which will not be described in detail here.

In an embodiment of the present disclosure, a network- side device sends configuration information to a terminal for indicating the division of frequency domain resources corresponding to different directions within a BWP, so that the terminal determines the specific division of each part of the frequency domain resources according to the configuration information, thereby enabling the terminal to achieve full-duplex with non-overlapping sub-bands based on different frequency domain ranges, thereby improving the transmission performance of the full-duplex terminal.

The above embodiments introduce the resource indication method disclosed in the present invention. The following embodiments will further illustrate the corresponding device in conjunction with the accompanying drawings.

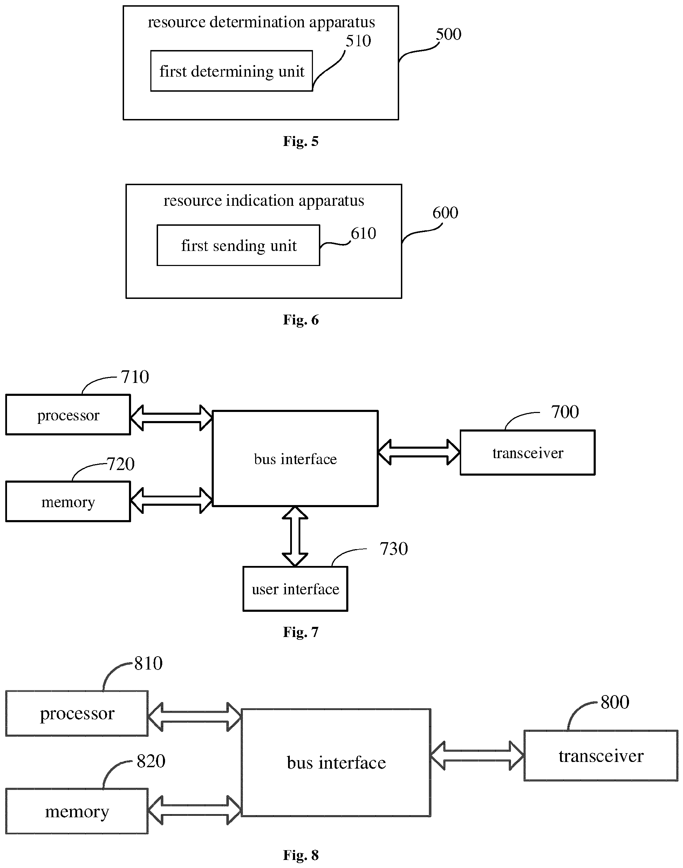

Specifically, as shown in Fig. 5, an embodiment of the present disclosure provides a resource determination apparatus 500, which is applied to a terminal and includes:

a first determining unit, configured to determine a range of first frequency domain resources and a range of second frequency domain resources within a bandwidth part (BWP) according to configuration information, where the first frequency domain resources and the second frequency domain resources within the BWP do not overlap, and a transmission direction corresponding to the first frequency domain resources is different from a transmission direction corresponding to the second frequency domain resources..

Optionally, the device further includes:

a second determining unit, configured to determine, according to the configuration information, that the BWP includes the first frequency domain resources and the second frequency domain resources.

Optionally, the configuration information includes: public configuration information of a serving cell or BWP configuration information;

The second determining unit includes:

a first determining sub-unit, configured to determine a start position of a target sub-band and bandwidth information of the target sub-band based on the public configuration information of the serving cell, where the serving cell includes at least one BWP; or determining a start position of the target sub-band and bandwidth information of the target sub-band based on the BWP configuration information;

a second determining sub-unit, configured to determine, according to the start position of the target sub-band, the bandwidth information of the target sub-band, and related information of the BWP, determining that the BWP includes the first frequency domain resources and the second frequency domain resources.

Optionally, the public configuration information of the serving cell includes a carrier start position, a first offset between the start position of the target sub-band and the carrier start position;

The first determining sub-unit is configured to: determine the start position of the target sub-band according to the carrier start position and the first offset.

Optionally, the BWP configuration information includes a start position of the BWP, a second offset between a start position of the target sub-band and a start position of the BWP;

the first determining sub-unit is configured to:

determine the start position of the target sub-band according to the start position of the BWP and the second offset.

Optionally, the second determining sub-unit is configured to:

determine an end position of the target sub-band according to a start position of the target sub-band and bandwidth information of the target sub-band;

according to a positional relationship between the start position of the target sub-band and/or the end position of the target sub-band and a bandwidth range of the BWP, determine that the BWP includes the first frequency domain resources and the second frequency domain resources.

Optionally, the second determining sub-unit is configured to:

according to a second offset between a start position of the target sub-band and a start position of the BWP, determine that the BWP includes the first frequency domain resources and the second frequency domain resources.

Optionally, the determining that the BWP includes the first frequency domain resource and the second frequency domain resource according to the positional relationship between the start position of the target sub-band and/or the end position of the target sub-band and the bandwidth range of the BWP includes:

if the start position of the target sub-band and/or the end position of the target sub-band is within the bandwidth range of the BWP, determining that the BWP includes the first frequency domain resources and the second frequency domain resources.

Optionally, the determining that the BWP includes the first frequency domain resource and the second frequency domain resource according to the second offset between the start position of the target sub-band and the start position of the BWP includes one of the following:

if the second offset is less than or equal to 0, and the end position of the target sub-band is greater than or equal to the start position of the BWP, determining that the BWP includes the first frequency domain resources and the second frequency domain resources;
if the second offset is greater than 0 and is smaller than the bandwidth of the BWP, determining that the BWP includes the first frequency domain resources and the second frequency domain resources.

Optionally, the first determining sub-unit is configured to:
according to the configuration information, determine that the frequency domain resources overlapping with the bandwidth of the target sub-band in the bandwidth range of the BWP are the range of the first frequency domain resources corresponding to the target sub-band; and the other frequency domain resources in the bandwidth range of the BWP except the range of the first frequency domain resources are the range of the second frequency domain resources.

Optionally, the device further includes:
a third determining sub-unit, configured to, when it is determined that the BWP includes the first frequency domain resource and the second frequency domain resource, determine that a working mode of the terminal is a sub-band full-duplex working mode.

Optionally, in the sub-band full-duplex working mode, the terminal performs at least one of the following operations:

performing a transmission based on downlink control information (DCI) determined based on the sub-band bandwidth;
determining whether to perform a transmission in the target sub-band based on transmission direction indication information;
determining a transmission direction based on the transmission direction indication information; and
determining the transmission direction within a time unit based on the first rule.

Optionally, the device further includes:

a first transmission unit, configured to perform data transmission with a network side device based on the first frequency domain resources and the second frequency domain resources respectively;
the first frequency domain resources are used for data transmission in a first direction, and the second frequency domain resources are used for data transmission in a second direction.

According to the present disclosure, the terminal determines the range of the first frequency domain resources and the range of the second frequency domain resources within the BWP according to the configuration information, and determines the specific division of the frequency domain resources corresponding to different transmission directions, so that the terminal can achieve full-duplex with non-overlapping sub-bands based on different frequency domain ranges, thereby improving the transmission performance of the full-duplex terminal.

It should be noted here that the above-mentioned device provided in the embodiment of the present disclosure can implement all the method steps implemented in the above-mentioned method embodiment applied to the terminal, and can achieve the same technical effect. The parts and beneficial effects of this embodiment that are the same as the method embodiment will not be described in detail here.

Specifically, as shown in Fig. 6, an embodiment of the present disclosure provides a resource indication apparatus 600, which is applied to a network side device, including:

a first sending unit 610, configured to send configuration information to a terminal, where the configuration information is configured to indicate a range of first frequency domain resources and a range of second frequency domain resources within bandwidth part (BWP);
where the first frequency domain resources and the second frequency domain resources within the BWP do not overlap, and a transmission direction corresponding to the first frequency domain resources is different from a transmission direction corresponding to the second frequency domain resources.

Optionally, the configuration information is configured to indicate that the BWP includes the first frequency domain resources and the second frequency domain resources.

Optionally, the configuration information includes: public configuration information of a serving cell or BWP configuration information;

the configuration information being configured to indicate that the BWP includes the first frequency domain resources and the second frequency domain resources includes:

indicating a start position of a target sub-band and bandwidth information of the target sub-band through public configuration information of the serving cell, where the serving cell includes at least one BWP; or indicating a start position of a target sub-band and bandwidth information of a target sub-band through BWP configuration information; through the start position of the target sub-band, the bandwidth information of the target sub-band and related information of the BWP, indicating that the BWP includes the first frequency domain resources and the second frequency domain resources.

Optionally, the public configuration information of the serving cell includes a carrier start position, a first offset between the start position of the target sub-band and the carrier start position;

indicating the start position of the target sub-band through the public configuration information of the serving cell includes: indicating the start position of the target sub-band by the carrier start position and the first offset.

Optionally, the BWP configuration information includes a start position of the BWP, a second offset between the start position of the target sub-band and a start position of the BWP;

the indicating the start position of the target sub-band by the BWP configuration information includes:

indicating the start position of the target sub-band by the start position of the BWP and the second offset.

Optionally, when the configuration information indicates that the BWP includes the first frequency domain resource and the second frequency domain resource, the configuration information indicates that a working mode of the terminal is a sub-band full-duplex working mode.

Optionally, in the sub-band full-duplex working mode, the network side device performs at least one of the following operations:

performing a transmission based on downlink control information (DCI) determined based on the sub-band bandwidth;
determining whether to perform a transmission in the target sub-band based on transmission direction indication information;
determining a transmission direction based on the transmission direction indication information;
determining the transmission direction within a time unit based on the first rule.

Optionally, the device further includes:

a second transmission unit, configured to perform data transmission with the terminal based on the first frequency domain resources and the second frequency domain resources respectively;
the first frequency domain resources are used for data transmission in a first direction, and the second frequency domain resources are used for data transmission in a second direction.

In an embodiment of the present disclosure, a network- side device sends configuration information to a terminal for indicating the division of frequency domain resources corresponding to different directions within a BWP, so that the terminal determines the specific division of each part of the frequency domain resources according to the configuration information, thereby enabling the terminal to achieve full-duplex with non-overlapping sub-bands based on different frequency domain ranges, thereby improving the transmission performance of the full-duplex terminal.

It should be noted here that the above-mentioned device provided by the embodiment of the present disclosure can implement all the method steps implemented by the above-mentioned method embodiment applied to the network side device, and can achieve the same technical effect. The parts and beneficial effects of this embodiment that are the same as the method embodiment will not be described in detail here.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present disclosure is essentially or the part that contributes to the relevant technology or all or part of the technical solution can be embodied in the form of a software product. The computer software product is stored in a storage medium, including several instructions to enable a computer device (which can be a personal computer, server, or network device, etc.) or a processor (processor) to perform all or part of the steps of the method described in each embodiment of the present disclosure. The aforementioned storage medium includes: U disk, mobile hard disk, read-only memory (ROM), random access memory (RAM), disk or optical disk, etc. Various media that can store program codes.

As shown in Fig. 7, an embodiment of the present disclosure further provides a terminal, including: a memory 720, a transceiver 700, and a processor 710; where the memory 720 is used to store a computer program; the transceiver 700 is used to send and receive data under the control of the processor 710; the processor 710 is used to read the computer program in the memory and perform the following operations:

determining a range of first frequency domain resources and a range of second frequency domain resources within a bandwidth part (BWP) according to configuration information, where the first frequency domain resources and the second frequency domain resources within the BWP do not overlap, and a transmission direction corresponding to the first frequency domain resources is different from a transmission direction corresponding to the second frequency domain resources.

Optionally, the processor is configured to read the computer program in the memory to perform:

determining, according to the configuration information, that the BWP includes the first frequency domain resources and the second frequency domain resources.

Optionally, the configuration information includes: public configuration information of a serving cell or BWP configuration information;

the processor is configured to read the computer program in the memory to perform:

determining a start position of a target sub-band and bandwidth information of the target sub-band based on the public configuration information of the serving cell, where the serving cell includes at least one BWP; or determining a start position of the target sub-band and bandwidth information of the target sub-band based on the BWP configuration information;

according to the start position of the target sub-band, the bandwidth information of the target sub-band, and related information of the BWP, determining that the BWP includes the first frequency domain resources and the second frequency domain resources.

Optionally, the public configuration information of the serving cell includes a carrier start position, a first offset between the start position of the target sub-band and the carrier start position;

the processor is configured to read the computer program in the memory to perform:

determining the start position of the target sub-band according to the carrier start position and the first offset.

Optionally, the BWP configuration information includes a start position of the BWP, a second offset between a start position of the target sub-band and a start position of the BWP;

the processor is configured to read the computer program in the memory to perform:

determining the start position of the target sub-band according to the start position of the BWP and the second offset.

Optionally, the processor is configured to read the computer program in the memory to perform:

determining an end position of the target sub-band according to a start position of the target sub-band and bandwidth information of the target sub-band;

according to a positional relationship between the start position of the target sub-band and/or the end position of the target sub-band and a bandwidth range of the BWP, determining that the BWP includes the first frequency domain resources and the second frequency domain resources.

Optionally, the processor is configured to read the computer program in the memory to perform:

according to a second offset between a start position of the target sub-band and a start position of the BWP, determining that the BWP includes the first frequency domain resources and the second frequency domain resources.

Optionally, the processor is configured to read the computer program in the memory to perform:

if the start position of the target sub-band and/or the end position of the target sub-band is within the bandwidth range of the BWP, determining that the BWP includes the first frequency domain resources and the second frequency domain resources.

Optionally, the processor is configured to read the computer program in the memory to perform:

if the second offset is less than or equal to 0, and the end position of the target sub-band is greater than or equal to the start position of the BWP, determining that the BWP includes the first frequency domain resources and the second frequency domain resources;

if the second offset is greater than 0 and is smaller than the bandwidth of the BWP, determining that the BWP includes the first frequency domain resources and the second frequency domain resources.

Optionally, the processor is configured to read the computer program in the memory to perform: according to the configuration information, determining that the frequency domain resources overlapping with the bandwidth of the target sub-band in the bandwidth range of the BWP are the range of the first frequency domain resources corresponding to the target sub-band; and the other frequency domain resources in the bandwidth range of the BWP except the range of the first frequency domain resources are the range of the second frequency domain resources.

Optionally, the processor is configured to read the computer program in the memory to perform: when it is determined that the BWP includes the first frequency domain resource and the second frequency domain resource, determining that a working mode of the terminal is a sub-band full-duplex working mode.

Optionally, the processor is configured to read the computer program in the memory to perform:

performing a transmission based on downlink control information (DCI) determined based on the sub-band bandwidth;
determining whether to perform a transmission in the target sub-band based on transmission direction indication information;
determining a transmission direction based on the transmission direction indication information;
determining the transmission direction within a time unit based on the first rule.

Optionally, the processor is configured to read the computer program in the memory to perform:

performing data transmission with a network side device based on the first frequency domain resources and the second frequency domain resources respectively;
where the first frequency domain resources are used for data transmission in a first direction, and the second frequency domain resources are used for data transmission in a second direction.

In Fig. 7, the bus architecture may include any number of interconnected buses and bridges, specifically one or more processors represented by processor 710 and various circuits of memory represented by memory 720 are linked together. The bus architecture may also link together various other circuits such as peripherals, voltage regulators, and power management circuits, which are well known in the art and are therefore not further described herein. The bus interface provides an interface. The transceiver 700 may be a plurality of components, namely, a transmitter and a transceiver, providing a unit for communicating with various other devices on a transmission medium. For different user devices, the user interface 730 may also be an interface capable of externally connecting or internally connecting required devices, and the connected devices include but are not limited to a keypad, a display, a speaker, a microphone, a joystick, and the like. The processor 710 is responsible for managing the bus architecture and general processing, and the memory 720 may store data used by the processor 710 when performing operations.

The processor 710 may be a central processing unit (CPU), an application specific integrated circuit (ASIC), a field programmable gate array (FPGA) or a complex programmable logic device (CPLD). The processor may also adopt a multi-core architecture.

It should be noted here that the above-mentioned terminal provided in the embodiment of the present disclosure can implement all the method steps implemented by the above-mentioned method embodiment applied to the terminal, and can achieve the same technical effect. The parts and beneficial effects of this embodiment that are the same as the method embodiment will not be described in detail here.

As shown in Fig.8, an embodiment of the present disclosure further provides a network side device, including: a memory 820, a transceiver 800, and a processor 810; where the memory 820 is used to store a computer program; the processor 810 is used to read the computer program in the memory; the transceiver 800 is used to send and receive data under the control of the processor 810 and perform the following operations:

sending configuration information to a terminal, where the configuration information is configured to indicate a range of first frequency domain resources and a range of second frequency domain resources within bandwidth part (BWP); where the first frequency domain resources and the second frequency domain resources within the BWP do not overlap, and a transmission direction corresponding to the first frequency domain resources is different from a transmission direction corresponding to the second frequency domain resources.

Optionally, the configuration information is configured to indicate that the BWP includes the first frequency domain resources and the second frequency domain resources.

Optionally, the configuration information includes: public configuration information of a serving cell or BWP configuration information;

the configuration information being configured to indicate that the BWP includes the first frequency domain resources and the second frequency domain resources includes:

indicating a start position of a target sub-band and bandwidth information of the target sub-band through public configuration information of the serving cell, where the serving cell includes at least one BWP; or indicating a start position of a target sub-band and bandwidth information of a target sub-band through BWP configuration information; through the start position of the target sub-band, the bandwidth information of the target sub-band and related information of the BWP, indicating that the BWP includes the first frequency domain resources and the second frequency domain resources.

Optionally, the public configuration information of the serving cell includes a carrier start position, a first offset between the start position of the target sub-band and the carrier start position;

the processor is configured to read the computer program in the memory to perform:

indicating the start position of the target sub-band by the carrier start position and the first offset.

Optionally, the BWP configuration information includes a start position of the BWP, a second offset between the start position of the target sub-band and a start position of the BWP;

the processor is configured to read the computer program in the memory to perform:

indicating the start position of the target sub-band by the start position of the BWP and the second offset.

Optionally, when the configuration information indicates that the BWP includes the first frequency domain resource and the second frequency domain resource, the configuration information indicates that a working mode of the terminal is a sub-band full-duplex working mode.

Optionally, in the sub-band full-duplex working mode, the processor is configured to read the computer program in the memory to perform:

performing a transmission based on downlink control information (DCI) determined based on the sub-band bandwidth;

determining whether to perform a transmission in the target sub-band based on transmission direction indication information;

determining a transmission direction based on the transmission direction indication information;

determining the transmission direction within a time unit based on the first rule.

Optionally, the processor is configured to read the computer program in the memory to perform:

performing data transmission with the terminal based on the first frequency domain resources and the second frequency domain resources respectively;

where the first frequency domain resources are used for data transmission in a first direction, and the second frequency domain resources are used for data transmission in a second direction.

In Fig.8, the bus architecture may include any number of interconnected buses and bridges, specifically one or more processors represented by processor 810 and various circuits of memory represented by memory 820 are linked together. The bus architecture may also link together various other circuits such as peripherals, voltage regulators, and power management circuits, which are well known in the art and are therefore not further described herein. The bus interface provides an interface. The transceiver 800 may be a plurality of components, namely, a transmitter and a transceiver, providing a unit for communicating with various other devices on a transmission medium. The processor 810 is responsible for managing the bus architecture and general processing, and the memory 820 may store data used by the processor 810 when performing operations.

The processor 810 may be a central processing unit (CPU), an application specific integrated circuit (ASIC), a field programmable gate array (FPGA) or a complex programmable logic device (CPLD). The processor may also adopt a multi-core architecture.

It should be noted here that the above-mentioned network side device provided in the embodiment of the present disclosure can implement all the method steps implemented by the above-mentioned method embodiment applied to the network side device, and can achieve the same technical effect. The parts and beneficial effects that are the same as the method embodiment in this embodiment will not be described in detail here.

In addition, a specific embodiment of the present disclosure further provides a processor-readable storage medium on which a computer program is stored, where when the program is executed by the processor, the steps of the resource determination method or the steps of the resource indication method are implemented. The same technical effect can be achieved, and to avoid repetition, it will not be repeated here. Among them, the readable storage medium can be any available medium or data storage device that can be accessed by the processor, including but not limited to magnetic storage (such as floppy disk, hard disk, magnetic tape, magneto-optical (MO)), etc.), optical storage (such as compact disk (CD), digital video disc (DVD), Blu-ray Disc (BD), high-definition versatile disc (HVD), etc.), and semiconductor memory (such as read-only memory (ROM), erasable programmable read-only memory (EPROM), electrically erasable programmable read only memory (EEPROM), non-volatile memory (NAND FLASH), solid state disk ( SSD), etc.).

Those skilled in the art will appreciate that the embodiments of the present disclosure may be provided as methods, systems, or computer program products. Therefore, the present disclosure may take the form of a complete hardware embodiment, a complete software embodiment, or an embodiment combining software and hardware. Furthermore, the present disclosure may take the form of a computer program product implemented on one or more computer-usable storage media (including but not limited to disk storage and optical storage, etc.) containing computer-usable program codes.

The present disclosure is described with reference to the flowcharts and/or block diagrams of the methods, devices (systems), and computer program products according to the embodiments of the present disclosure. It should be understood that each process and/or box in the flowchart and/or block diagram, as well as the combination of the processes and/or boxes in the flowchart and/or block diagram, can be implemented by computer executable instructions. These computer executable instructions can be provided to a processor of a general-purpose computer, a special-purpose computer, an embedded processor, or other programmable data processing device to produce a machine, so that the instructions executed by the processor of the computer or other programmable data processing device produce a device for implementing the functions specified in one process or multiple processes in the flowchart and/or one box or multiple boxes in the block diagram.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are performed on the computer or other programmable device to produce a computer-implemented process, whereby the instructions executed on the computer or other programmable device provide steps for implementing the functions specified in one or more flows of the flowchart and/or one or more blocks of the block diagram.

It should be noted that it should be understood that the division of the above modules is only a division of logical functions. In actual implementation, they can be fully or partially integrated into one physical entity, or they can be physically separated. And these modules can all be implemented in the form of software called by processing elements; they can also be all implemented in the form of hardware; some modules can also be implemented in the form of software called by processing elements, and some modules can be implemented in the form of hardware. For example, the determination module can be a separately established processing element, or it can be integrated in a chip of the above-mentioned device. In addition, it can also be stored in the memory of the above-mentioned device in the form of program code, and called and executed by a processing element of the above-mentioned device. The implementation of other modules is similar. In addition, these modules can be fully or partially integrated together, or they can be implemented independently. The processing element described here can be an integrated circuit with signal processing capabilities. In the implementation process, each step of the above method or each module above can be completed by an integrated logic circuit of hardware in the processor element or instructions in the form of software.

For example, each module, unit, sub-unit or sub-module may be one or more integrated circuits configured to implement the above method, such as one or more application specific integrated circuits (ASIC), or one or more microprocessors (digital signal processor, DSP), or one or more field programmable gate arrays (FPGA), etc. For another example, when a module above is implemented in the form of a processing element scheduling program code, the processing element may be a general-purpose processor, such as a central processing unit (CPU) or other processor that can call program code. For another example, these modules can be integrated together and implemented in the form of a system-on-a-chip (SOC).

The present disclosure are used to distinguish similar objects, and are not necessarily used to describe a specific order or sequence. It should be understood that the data used in this way can be interchanged where appropriate, so that the embodiments of the present disclosure described here, such as those illustrated or described here, are implemented in a sequence other than the order. In addition, the terms "including" and "having" and any of their variations are intended to cover non- exclusive inclusions, for example, a process, method, system, product or device that includes a series of steps or units is not necessarily limited to those steps or units clearly listed, but may include other steps or units that are not clearly listed or inherent to these processes, methods, products or devices. In addition, the use of "and/or" in the specification and claims represents at least one of the connected objects, such as A and/or B and/or C, indicating the inclusion of 7 situations including single A, single B, single C, and both A and B exist, both B and C exist, both A and C exist, and both A, B and C exist. Similarly, the use of "at least one of A and B" in the specification and claims should be understood as "single A, single B, or both A and B exist".

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

**Claims**

1. A resource determination method, comprising:
   a terminal determining a range of first frequency domain resources and a range of second frequency domain resources within a bandwidth part (BWP) according to configuration information, wherein the first frequency domain resources and the second frequency domain resources within the BWP do not overlap, and a transmission direction corresponding to the first frequency domain resources is different from a transmission direction corresponding to the second frequency domain resources.

2. The method according to claim 1, further comprising:
   determining, according to the configuration information, that the BWP comprises the first frequency domain resources and the second frequency domain resources.

3. The method according to claim 2, wherein the configuration information comprises: public configuration information of a serving cell or BWP configuration information;
   the determining, according to the configuration information, that the BWP comprises the first frequency domain resources and the second frequency domain resources comprises:

      determining a start position of a target sub-band and bandwidth information of the target sub-band based on the public configuration information of the serving cell, wherein the serving cell comprises at least one BWP; or
      determining a start position of the target sub-band and bandwidth information of the target sub-band based on the BWP configuration information;
      according to the start position of the target sub-band, the bandwidth information of the target sub-band, and related information of the BWP, determining that the BWP comprises the first frequency domain resources and the second frequency domain resources.

4. The method according to claim 3, wherein the public configuration information of the serving cell comprises a carrier start position, a first offset between the start position of the target sub-band and the carrier start position;
   the determining the start position of the target sub-band based on the public configuration information of the serving cell comprises:
   determining the start position of the target sub-band according to the carrier start position and the first offset.

5. The method according to claim 3, wherein the BWP configuration information comprises a start position of the BWP, a second offset between a start position of the target sub-band and a start position of the BWP;
   the determining the start position of the target sub-band based on the BWP configuration information comprises:
   determining the start position of the target sub-band according to the start position of the BWP and the second offset.

6. The method according to claim 3, wherein the determining that the BWP comprises the first frequency domain resource and the second frequency domain resource according to the start position of the target sub-band, the bandwidth information of the target sub-band and the related information of the BWP comprises:

      determining an end position of the target sub-band according to a start position of the target sub-band and bandwidth information of the target sub-band;
      according to a positional relationship between the start position of the target sub-band and/or the end position of the target sub-band and a bandwidth range of the BWP, determining that the BWP comprises the first frequency domain resources and the second frequency domain resources.

7. The method according to claim 3, wherein the determining that the BWP comprises the first frequency domain resource and the second frequency domain resource according to the start position of the target sub-band, the bandwidth information of the target sub-band and the related information of the BWP comprises:
   according to a second offset between a start position of the target sub-band and a start position of the BWP, determining that the BWP comprises the first frequency domain resources and the second frequency domain resources.

8. The method according to claim 6, wherein determining that the BWP comprises the first frequency domain resource and the second frequency domain resource according to the positional relationship between the start position of the target sub-band and/or the end position of the target sub-band and the bandwidth range of the BWP comprises:
if the start position of the target sub-band and/or the end position of the target sub-band is within the bandwidth range of the BWP, determining that the BWP comprises the first frequency domain resources and the second frequency domain resources.

9. The method according to claim 7, wherein the determining that the BWP comprises the first frequency domain resource and the second frequency domain resource according to the second offset between the start position of the target sub-band and the start position of the BWP comprises one of the following:

if the second offset is less than or equal to 0, and the end position of the target sub-band is greater than or equal to the start position of the BWP, determining that the BWP comprises the first frequency domain resources and the second frequency domain resources;
if the second offset is greater than 0 and is smaller than the bandwidth of the BWP, determining that the BWP comprises the first frequency domain resources and the second frequency domain resources.

10. The method according to claim 1, wherein the determining the range of the first frequency domain resource and the range of the second frequency domain resource within the BWP according to the configuration information comprises:
according to the configuration information, determining that the frequency domain resources overlapping with the bandwidth of the target sub-band in the bandwidth range of the BWP are the range of the first frequency domain resources corresponding to the target sub-band; and the other frequency domain resources in the bandwidth range of the BWP except the range of the first frequency domain resources are the range of the second frequency domain resources.

11. The method according to claim 2, further comprising:
when it is determined that the BWP comprises the first frequency domain resource and the second frequency domain resource, determining that a working mode of the terminal is a sub-band full-duplex working mode.

12. The method according to claim 11, wherein in the sub-band full-duplex working mode, the terminal performs at least one of the following operations:

performing a transmission based on downlink control information (DCI) determined based on the sub-band bandwidth;
determining whether to perform a transmission in the target sub-band based on transmission direction indication information;
determining a transmission direction based on the transmission direction indication information; and
determining the transmission direction within a time unit based on the first rule.

13. The method according to claim 1, further comprising:

performing data transmission with a network side device based on the first frequency domain resources and the second frequency domain resources respectively;
the first frequency domain resources are used for data transmission in a first direction, and the second frequency domain resources are used for data transmission in a second direction.

14. A resource indication method, comprising:

a network side device sending configuration information to a terminal, wherein the configuration information is configured to indicate a range of first frequency domain resources and a range of second frequency domain resources within bandwidth part (BWP);
wherein the first frequency domain resources and the second frequency domain resources within the BWP do not overlap, and a transmission direction corresponding to the first frequency domain resources is different from a transmission direction corresponding to the second frequency domain resources.

15. The method according to claim 14, wherein the configuration information is configured to indicate that the BWP comprises the first frequency domain resources and the second frequency domain resources.

16. The method according to claim 15, wherein the configuration information comprises: public configuration information of a serving cell or BWP configuration information;
the configuration information being configured to indicate that the BWP comprises the first frequency domain resources and the second frequency domain resources comprises:

indicating a start position of a target sub-band and bandwidth information of the target sub-band through public configuration information of the serving cell, wherein the serving cell comprises at least one BWP; or indicating a start position of a target sub-band and bandwidth information of a target sub-band through BWP configuration information;
through the start position of the target sub-band, the bandwidth information of the target sub-band and related information of the BWP, indicating that the BWP comprises the first frequency domain resources and the second frequency domain resources.

17. The method according to claim 16, wherein the public configuration information of the serving cell comprises a carrier start position, a first offset between the start position of the target sub-band and the carrier start position;
indicating the start position of the target sub-band through the public configuration information of the serving cell comprises:
indicating the start position of the target sub-band by the carrier start position and the first offset.

18. The method according to claim 16, wherein the BWP configuration information comprises a start position of the BWP, a second offset between the start position of the target sub-band and a start position of the BWP;
the indicating the start position of the target sub-band by the BWP configuration information comprises:
indicating the start position of the target sub-band by the start position of the BWP and the second offset.

19. The method according to claim 15, wherein when the configuration information indicates that the BWP comprises the first frequency domain resource and the second frequency domain resource, the configuration information indicates that a working mode of the terminal is a sub-band full-duplex working mode.

20. The method according to claim 19, wherein in the sub-band full-duplex working mode, the network side device performs at least one of the following operations:

performing a transmission based on downlink control information (DCI) determined based on the sub-band bandwidth;
determining whether to perform a transmission in the target sub-band based on transmission direction indication information;
determining a transmission direction based on the transmission direction indication information;
determining the transmission direction within a time unit based on the first rule.

21. The method according to claim 14, further comprising:

performing data transmission with the terminal based on the first frequency domain resources and the second frequency domain resources respectively;
the first frequency domain resources are used for data transmission in a first direction, and the second frequency domain resources are used for data transmission in a second direction.

22. A terminal, comprising: a memory, a transceiver, and a processor:
the memory is configured to store a computer program; a transceiver is configured to send and receive data under a control of the processor; and a processor is configured to read the computer program in the memory to perform:
determining a range of first frequency domain resources and a range of second frequency domain resources within a bandwidth part (BWP) according to configuration information, wherein the first frequency domain resources and the second frequency domain resources within the BWP do not overlap, and a transmission direction corresponding to the first frequency domain resources is different from a transmission direction corresponding to the second frequency domain resources.

23. The terminal according to claim 22, wherein the processor is configured to read the computer program in the memory to perform:
determining, according to the configuration information, that the BWP comprises the first frequency domain resources and the second frequency domain resources.

24. The terminal according to claim 23, wherein the configuration information comprises: public configuration information of a serving cell or BWP configuration information;
the processor is configured to read the computer program in the memory to perform:

determining a start position of a target sub-band and bandwidth information of the target sub-band based on the public configuration information of the serving cell, wherein the serving cell comprises at least one BWP; or determining a start position of the target sub-band and bandwidth information of the target sub-band based on the BWP configuration information;
according to the start position of the target sub-band, the bandwidth information of the target sub-band, and related information of the BWP, determining that the BWP comprises the first frequency domain resources and the second frequency domain resources.

25. The terminal according to claim 24, wherein the public configuration information of the serving cell comprises a carrier start position, a first offset between the start position of the target sub-band and the carrier start position;
the processor is configured to read the computer program in the memory to perform:
determining the start position of the target sub-band according to the carrier start position and the first offset.

26. The terminal according to claim 24, wherein the BWP configuration information comprises a start position of the BWP, a second offset between a start position of the target sub-band and a start position of the BWP;
the processor is configured to read the computer program in the memory to perform:
determining the start position of the target sub-band according to the start position of the BWP and the second offset.

27. The terminal according to claim 24, wherein the processor is configured to read the computer program in the memory to perform:

determining an end position of the target sub-band according to a start position of the target sub-band and bandwidth information of the target sub-band;
according to a positional relationship between the start position of the target sub-band and/or the end position of the target sub-band and a bandwidth range of the BWP, determining that the BWP comprises the first frequency domain resources and the second frequency domain resources.

28. The terminal according to claim 24, wherein the processor is configured to read the computer program in the memory to perform:
according to a second offset between a start position of the target sub-band and a start position of the BWP, determining that the BWP comprises the first frequency domain resources and the second frequency domain resources.

29. The terminal according to claim 27, wherein the processor is configured to read the computer program in the memory to perform:
if the start position of the target sub-band and/or the end position of the target sub-band is within the bandwidth range of the BWP, determining that the BWP comprises the first frequency domain resources and the second frequency domain resources.

30. The terminal according to claim 28, wherein the processor is configured to read the computer program in the memory to perform:

if the second offset is less than or equal to 0, and the end position of the target sub-band is greater than or equal to the start position of the BWP, determining that the BWP comprises the first frequency domain resources and the second frequency domain resources;
if the second offset is greater than 0 and is smaller than the bandwidth of the BWP, determining that the BWP comprises the first frequency domain resources and the second frequency domain resources.

31. The terminal according to claim 22, wherein the processor is configured to read the computer program in the memory to perform:

according to the configuration information, determining that the frequency domain resources overlapping with the bandwidth of the target sub-band in the bandwidth range of the BWP are the range of the first frequency domain resources corresponding to the target sub-band; and the other frequency domain resources in the bandwidth range of the BWP except the range of the first frequency domain resources are the range of the second frequency domain resources.

32. The terminal according to claim 23, wherein the processor is configured to read the computer program in the memory to perform:
when it is determined that the BWP comprises the first frequency domain resource and the second frequency domain resource, determining that a working mode of the terminal is a sub-band full-duplex working mode.

33. The terminal according to claim 32, wherein the processor is configured to read the computer program in the memory to perform:

performing a transmission based on downlink control information (DCI) determined based on the sub-band bandwidth;
determining whether to perform a transmission in the target sub-band based on transmission direction indication information;
determining a transmission direction based on the transmission direction indication information;
determining the transmission direction within a time unit based on the first rule.

34. The terminal according to claim 22, wherein the processor is configured to read the computer program in the memory to perform:

performing data transmission with a network side device based on the first frequency domain resources and the second frequency domain resources respectively;
wherein the first frequency domain resources are used for data transmission in a first direction, and the second frequency domain resources are used for data transmission in a second direction.

35. A network side device, comprising: a memory, a transceiver, and a processor:
the memory is configured to store a computer program; a transceiver is configured to send and receive data under a control of the processor; and a processor is configured to read the computer program in the memory to perform:

sending configuration information to a terminal, wherein the configuration information is configured to indicate a range of first frequency domain resources and a range of second frequency domain resources within bandwidth part (BWP);
wherein the first frequency domain resources and the second frequency domain resources within the BWP do not overlap, and a transmission direction corresponding to the first frequency domain resources is different from a transmission direction corresponding to the second frequency domain resources.

36. The network side device according to claim 35, wherein the configuration information is configured to indicate that the BWP comprises the first frequency domain resources and the second frequency domain resources.

37. The network side device according to claim 36, wherein the configuration information comprises: public configuration information of a serving cell or BWP configuration information;
the configuration information being configured to indicate that the BWP comprises the first frequency domain resources and the second frequency domain resources comprises:

indicating a start position of a target sub-band and bandwidth information of the target sub-band through public configuration information of the serving cell, wherein the serving cell comprises at least one BWP; or indicating a start position of a target sub-band and bandwidth information of a target sub-band through BWP configuration information;
through the start position of the target sub-band, the bandwidth information of the target sub-band and related information of the BWP, indicating that the BWP comprises the first frequency domain resources and the second frequency domain resources.

38. The network side device according to claim 37, wherein the public configuration information of the serving cell comprises a carrier start position, a first offset between the start position of the target sub-band and the carrier start position;
the processor is configured to read the computer program in the memory to perform:
indicating the start position of the target sub-band by the carrier start position and the first offset.

39. The network side device according to claim 37, wherein the BWP configuration information comprises a start position of the BWP, a second offset between the start position of the target sub-band and a start position of the BWP;
the processor is configured to read the computer program in the memory to perform:
indicating the start position of the target sub-band by the start position of the BWP and the second offset.

40. The network side device according to claim 36, wherein when the configuration information indicates that the BWP comprises the first frequency domain resource and the second frequency domain resource, the configuration information indicates that a working mode of the terminal is a sub-band full-duplex working mode.

41. The network side device according to claim 40, wherein in the sub-band full-duplex working mode, the processor is configured to read the computer program in the memory to perform:

performing a transmission based on downlink control information (DCI) determined based on the sub-band bandwidth;
determining whether to perform a transmission in the target sub-band based on transmission direction indication information;
determining a transmission direction based on the transmission direction indication information;
determining the transmission direction within a time unit based on the first rule.

42. The network side device according to claim 35, wherein the processor is configured to read the computer program in the memory to perform:

performing data transmission with the terminal based on the first frequency domain resources and the second frequency domain resources respectively;
wherein the first frequency domain resources are used for data transmission in a first direction, and the second frequency domain resources are used for data transmission in a second direction.

43. A resource determination apparatus, comprising:
a first determining unit, configured to determine a range of first frequency domain resources and a range of second frequency domain resources within a bandwidth part (BWP) according to configuration information, wherein the first frequency domain resources and the second frequency domain resources within the BWP do not overlap, and a transmission direction corresponding to the first frequency domain resources is different from a transmission direction corresponding to the second frequency domain resources.

44. A resource indication apparatus, comprising:

a first sending unit, configured to send configuration information to a terminal, wherein the configuration information is configured to indicate a range of first frequency domain resources and a range of second frequency domain resources within bandwidth part (BWP);
wherein the first frequency domain resources and the second frequency domain resources within the BWP do not overlap, and a transmission direction corresponding to the first frequency domain resources is different from a transmission direction corresponding to the second frequency domain resources.

45. A processor-readable storage medium, storing a computer program, wherein when the computer program is executed by a processor, the computer program performs the resource determination method according to any one of claims 1 to 13, or performs the resource indication method according to any one of claims 14 to 21.

start

a terminal determining a range of first frequency domain resources and a range of second frequency domain resources within a BWP according to configuration information, where the first frequency domain resources and the second frequency domain resources within the BWP do not overlap, and a transmission direction corresponding to the first frequency domain resources is different from a transmission direction corresponding to the second frequency domain resources

101

end

**Fig. 1**

**Fig. 2**

**Fig. 3**

start

a network side device sending configuration information to a terminal, where the configuration information is configured to indicate a range of first frequency domain resources and a range of second frequency domain resources within bandwidth part (BWP); where the first frequency domain resources and the second frequency domain resources within the BWP do not overlap, and a transmission direction corresponding to the first frequency domain resources is different from a transmission direction corresponding to the second frequency domain resources

401

end

**Fig. 4**

resource determination apparatus

first determining unit 510

500

**Fig. 5**

resource indication apparatus

first sending unit 610

600

**Fig. 6**

710

processor

720

memory

bus interface

700

transceiver

730

user interface

**Fig. 7**

810

processor

820

memory

bus interface

800

transceiver

**Fig. 8**

**INTERNATIONAL SEARCH REPORT**

| International application No. |
| --- |
| **PCT/CN2023/081685** |

**A. CLASSIFICATION OF SUBJECT MATTER**

H04W 72/04(2023.01)i

According to International Patent Classification (IPC) or to both national classification and IPC

**B. FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, WPABS, ENTXT, DWPI, VEN, CNABS, 3GPP: 资源确定, 配置, 部分带宽, BWP, 频域, 资源, 范围, 第二, 第一, 不重叠, 传输方向, 方向, 不同, 频域资源, 重叠, resource determination, configuration, partial bandwidth, BWP, frequency domain, resource, range, second, first, non overlapping, transmission direction, direction, different, frequency domain resources, overlapping

**C. DOCUMENTS CONSIDERED TO BE RELEVANT**

| Category* | Citation of document, with indication, where appropriate, of the relevant passages | Relevant to claim No. |
| --- | --- | --- |
| X | CN 109150487 A (HUAWEI TECHNOLOGIES CO., LTD.) 04 January 2019 (2019-01-04) description, paragraphs [0054]-[0129], figures 1-12, and claims 1-36 | 1-45 |
| X | CN 112399590 A (HUAWEI TECHNOLOGIES CO., LTD.) 23 February 2021 (2021-02-23) description, paragraphs [0091]-[0280], figures 1-38, and claims 1-39 | 1-45 |
| A | CN 107786983 A (HUAWEI TECHNOLOGIES CO., LTD.) 09 March 2018 (2018-03-09) entire document | 1-45 |
| A | CN 113748736 A (BEIJING XIAOMI MOBILE SOFTWARE CO., LTD.) 03 December 2021 (2021-12-03) entire document | 1-45 |
| A | US 2021006383 A1 (FUJITSU LIMITED) 07 January 2021 (2021-01-07) entire document | 1-45 |

☐ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 May 2023** | **23 May 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/081685**

| Patent document cited in search report | | | Publication date (day/month/year) | Patent family member(s) | | | Publication date (day/month/year) |
|---|---|---|---|---|---|---|---|
| CN | 109150487 | A | 04 January 2019 | WO | 2018228417 | A1 | 20 December 2018 |
| | | | | US | 2020120514 | A1 | 16 April 2020 |
| | | | | US | 11412393 | B2 | 09 August 2022 |
| | | | | EP | 3627751 | A1 | 25 March 2020 |
| | | | | EP | 3627751 | B1 | 01 September 2021 |
| CN | 112399590 | A | 23 February 2021 | WO | 2021032028 | A1 | 25 February 2021 |
| | | | | US | 2022173851 | A1 | 02 June 2022 |
| | | | | EP | EP4017175A1 | A1 | 22 June 2022 |
| CN | 107786983 | A | 09 March 2018 | WO | 2018040977 | A1 | 08 March 2018 |
| CN | 113748736 | A | 03 December 2021 | WO | 2023004650 | A1 | 02 February 2023 |
| US | 2021006383 | A1 | 07 January 2021 | US | 11588605 | B2 | 21 February 2023 |
| | | | | JP | 2021517427 | A | 15 July 2021 |
| | | | | JP | 7111171 | B2 | 02 August 2022 |
| | | | | WO | 2019191873 | A1 | 10 October 2019 |
| | | | | CN | 111919480 | A | 10 November 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210475953